# EUROPEAN PATENT APPLICATION

(11) **EP 4 265 582 A1**
(43) Date of publication of application: **25.10.2023**
(21) Application number: 22290019.3
(22) Date of filing: 21.04.2022
(51) Int. Cl.: C04B 28/00, C04B 14/26, C04B 20/02, C04B 28/04

(54) **METHOD FOR THE PREPARATION OF A CARBONATED MINERAL COMPONENT, CARBONATED MINERAL COMPONENT AND METHOD FOR THE PREPARATION OF A HYDRAULIC BINDER**

(71) Applicant: Holcim Technology Ltd, 5113 Holderbank (CH)
(72) Inventor: Morin, Vincent, 69003 Lyon (FR); Horgnies, Matthieu, 385540 Valencin (FR); Meyer, Vincent, 38300 Bourgoin Jallieu (FR); Benard, Philippe, 69007 Lyon (FR); Gagey, Fabrice, 38300 Domarin (FR)
(74) Representative: HGF

(57) **Abstract**

The invention relates to a method for the preparation of a carbonated mineral component in particular for the use as a substituent of cement in hydraulic binder compositions wherein a raw material comprising at least one of the group of concrete demolition waste, hardened concrete paste, hardened cement paste, or any mineral component containing hydrated calcium silicates, calcium aluminates is carbonated and heated, a carbonated mineral component manufactured in this way, a method for the preparation of a hydraulic binder using the carbonated mineral component and a cementitious component as well as a concrete composition with that hydraulic binder.

## Description

The invention relates to a method for the preparation of a carbonated mineral component, the carbonated mineral component as well as a method for the preparation of a hydraulic binder composition.

The carbonation of materials for use in construction materials is well known. Examples, such as carbonation of steel slag, special cements and concrete demolition waste have already been disclosed. The known carbonation of materials can be divided into two main approaches.

In the first approach the material is hardened by carbonation. Carbonation methods are known for hardening and use standard processes. This approach is for example disclosed in patent applications filed by Carbstone Innovation, Solidia Technologies or CarbonCure.

The processes disclosed in these applications have the advantage of sequestering CO₂ by forming particles of calcium carbonate. This can be achieved in several construction applications such as a production of small construction elements like pavers or blocks. In these methods the material to be carbonated may be mixed with small amounts of water and placed into molds. These molds are then placed in a curing chamber with a relatively high amount of CO₂, under controlled temperature and relative humidity. Through the carbonation of the materials, the carbonated elements develop mechanical strength.

The second approach is to carbonate a mineral constituent and to use it afterwards in powder form as a carbonated mineral component. The aim is to reduce the amount of Portland clinker in cement compositions by replacing parts of the Portland cement with this powder made from the carbonated mineral component. In a method according to the second approach, the carbonated mineral materials are used in a particular form which is then added to the Portland cement as a cement substitute. For example, demolition waste is carbonated via different processes and the resulting products are used as the cement substitute. Hereby, the amount of Portland clinker in the cement is lowered for the purpose of providing a material that reduces the CO₂ footprint. In the second approach the carbonation results in the formation of calcium carbonate particles which act as already mentioned as a filler material but do not contribute to the strength development of the cement. Consequently, higher carbonation rates of concrete demolition waste results therefore in principle in lower strength development. In practice the amount of carbonated mineral component according to the second approach is limited in cement compositions. The second approach is for example disclosed in EP 3656750, WO2019/115722, EP 3581257 and EP 3498681 A1.

From Yingpeng Hu, Journal of Energy Chemistry, volume 26, issue 5, September 2017, pages 927 - 935 the indirect mineral carbonation of a blast-furnace slag with (NH₄)₂SO₄ as a recyclable extant is known, wherein in this document (NH₄)₂SO₄was used to extract calcium and magnesium from blast-furnace slag (the main phases of gehlenite and akermanite) by using low-temperature roasting to fix CO₂ through aqueous carbonation.

Daniela Angulo, Materiales de Construccion 69 (333): 182, relates to the carbonation of hybrid concrete with high blast-furnace slag content and its impact on structural steel corrosion.

The effect of blast-furnace slag replacement ratio and curing method on pore structure change after carbonation on cement paste is disclosed in Junho Kim, Seung Hyun Na and Yukio Hama, materials (Basel), November 13, 2020 (21): 4787.

"Comparison of CO2 emissions from OPC and recycled cement production", Zhijun He; Xiaodong Zhu, Junjie Wang, Mulan Mud, Yuli Wang; Construction and Building Materials, Volume 211, 30 June 2019, Pages 965-973 discloses that the production of ordinary Portland cement (OPC) is responsible for a significant part of global CO₂ emission. In order to reduce the CO₂ emission for cement production, two types of recycled cements (RC-450 °C and RC-800°C) were produced in this study. The application of recycled cement could significantly reduce the environmental impacts caused by the landfills of demolished concrete waste. The recycled cements RC-450°C and RC-800°C were produced through burning waste old OPC pastes at 450°C and 800°C respectively and then grinding into powder through a ball mill. The CO₂ emissions from producing OPC, RC-450°C and RC-800°C were calculated and compared through considering the CO₂ emissions from both fuel burning and the clinker materials. Compared to the production process of OPC, the production of RC-450°C can reduce 94% of CO₂ emission. By mixing with water, an additional 4% CO₂ by weight of RC-450°C can be captured in the RC-450°C paste through the formation of calcium carboaluminate and additional calcite. RC-450°C showed lower CO₂ emission but a higher strength of paste than RC-800°C. Besides, RC-450°C paste was found to have a similar strength as the OPC paste, and this suggests that the RC-450°C could be used to totally replace OPC.

From "Recycled cement" ; Junjie Wang, Mulan Mu, Yongliang Liu, Construction and Building Materials, Volume 190, 30 November 2018, Pages 1124-1132 it is known that Cement recycling can reduce the environmental impact caused by the landfills of demolished concrete and the demand of raw materials for producing cement because the waste cement paste in demolished concrete could be used to produce recycled cement. Recycled cement was produced through burning a 2-year-old waste cement paste at 4 different temperatures (120 °C, 450°C, 750 °C and 1150°C) and then grinding into powder. The selected temperatures were the temperatures where there was a significant weight loss based on the thermogravimetric analysis (TGA) result of the old cement paste. The results show that the highest compressive strength happened at 450°C and the recycled cement paste had a similar strength as OPC paste but with a poor workability which was even beyond the measurement range of a rheometer. Increasing the particle size of recycled cement powder and partially replacing the cement powder with ground-granulated blast-furnace slag (GGBS) were found to be able to improve the workability of recycled cement paste effectively and at same time without reducing the compressive strength.

The article "CO2 mineralization of demolished concrete wastes into a supplementary cementitious material - a new CCU approach for the cement industry", Maciej Zajac, Global R&D, Jan Skocek, Jørgen Skibsted, Mohsen Ben Haha in RILEM Technical Letters, Open Access Journal of RILEM, RILEM Tech Lett, ISSN 2518-0231, Vol. 6 2021 adresses the carbon capture and utilization (CCU) approach based on CO₂ mineralization of cement paste from recycled concrete as new approach to capture CO₂ and significantly contribute to the reduction in CO₂ emissions associated with cement production. It is pointed out that the current literature suggests that all CO₂ released from the decomposition of limestone during clinker production can be sequestered by carbonation of the end-of-life cement paste. This carbonation can be achieved in a few hours at ambient temperature and pressure and with a relatively low CO₂ concentration (< 10 %) in the gas. The carbonation of cement paste produces calcite and an amorphous alumina-silica gel, the latter being a pozzolanic material that can be utilized as a supplementary cementitious material. The pozzolanic reaction of the alumina-silica gel is very rapid as a result of its high specific surface and amorphous structure. Thus, composite cements containing carbonated cement paste are characterized by a rapid strength gain. The successful implementation of this CCU approach relies also on improved concrete recycling techniques and methods currently under development to separate out the cement paste fines and such. Full concrete recycling will further improve the circular utilization of cement and concrete by using recycled aggregates instead of natural deposits of aggregates. Although the feasibility of the process has already been demonstrated at the industrial scale, there are still several open questions related to optimum carbonation conditions and the performance of carbonated material in novel composite cements.

The object of the invention is to provide for a method for the manufacturing of a carbonated mineral component which does not lead to a loss of strength when it is added to a hydraulic binder composition as a substituent for a hydraulic component, in particular a cement.

The object is met by way of the method according to claim 1.

It is a further object of the present invention to provide for a carbonated mineral component as a substituent for a hydraulic component in a hydraulic binder composition.

This object is met by way of the carbonated mineral component of claim 22.

It is still a further object of the invention to provide a method for the manufacturing of a hydraulic binder composition with a carbonated mineral component.

This object is met by way of the method for the manufacturing of the mineral binder according to claim 24.

It is still a further object of the invention to provide a concrete composition with high strength and a low carbon footprint.

This object is met by the concrete composition according to claim 29.

Further embodiments are claimed in the respective dependent claims.

The invention relates to a carbonated mineral component obtained from concrete waste and its method of preparation.

The carbonated mineral component has the lowest possible carbon footprint, and the concrete waste comprises one or several types of materials selected from concrete demolition waste, recycled cement paste, concrete fines, dried concrete sludges, etc. that have been subjected to a specific process according to the invention. The concrete waste is in a dry solid form, i.e. is a powder in the case of concrete fines or dried concrete sludge, or is composed of elements having a size of several centimeters in the case of concrete demolition waste.

The concrete waste may be already partially carbonated, from its exposure to air during its use time, which is particularly the case for concrete demolition waste.

Carbonation of concrete demolition waste, and its use in cement components, is well documented and is the subject of many patent applications, both from a manufacturing perspective and from a product perspective. Concrete waste is able to sequestrate CO₂ via CO₂ mineralization, and the use of carbonated concrete waste in cement and concrete compositions offers the double advantage of making use of a waste material, and sequestering CO₂.

One limitation of the use of carbonated concrete waste is that it behaves similarly to or slightly better than a limestone filler in cement and concrete compositions, i.e. does not possess any pozzolanic reactivity which would contribute to increase the final strength of such concrete compositions.

According to the invention it was found that a low temperature heat treatment of carbonated concrete waste results in a material that has a pozzolanic reactivity, and can therefore be used as a mineral component in cement and concrete compositions.

The process according to the invention may comprise at least two steps.

One step is a heating step in which the concrete waste is heated to temperatures between 250°C and 600°C.

This heating step can be achieved in various ways by use of a low temperature heat exchanger.

The energy the heat exchanger uses is preferentially sustainable energy. The energy can source from the combustion of biomethane, gases from the pyrolysis of renewable raw materials, hydrogen manufactured by the electrolysis of water (preferably with electric energy from sustainable sources like solar, wind or water energy and the like) or electricity from said sustainable sources. Further, heat from other industrial processes may be used, for example from a cement kiln.

It is preferred, that the concrete waste is ground to at least 2'000 cm²/g Blaine, preferably to 4'000 cm²/g Blaine before the heating step, measured as described in the standard EN 196-6:2018. Preferentially the energy for grinding is said sustainable electric energy.

Heating of the concrete waste can be achieved in a high temperature gas flow heat exchanger. For example a vertical counterflow heat exchanger, a fluidized bed heat exchanger, or any other apparatus suitable to transfer heat from a hot gas stream to a powdered material.

Radiative heaters or heated screw conveyors may alternatively be used. Further heating by mixing directly with hot clinker is an option.

In particular the heating is performed at a temperature T°C of 250°C < T°C < 800°C, preferentially at 250°C < T°C < 650°C, and more preferentially 300°C < T°C < 600°C.

Alternatively, this heat exchanger may be installed parallel to a cement kiln or other industrial heat source, so as to exchange heat from the cement kiln to the heat exchanger by radiation, convection, and conduction.

A second step is a carbonation step which is performed at a certain point in the manufacturing process.

The carbonation may be done with CO₂ which originates from a cement kiln (decarbonation of limestone and combustion of fuel), from the combustion of biomethane, gases from the pyrolysis of renewable raw materials and the like in particular from the sourcing of energy for the heating step or from other industrial processes or from ambient air.

The carbonation step is for example performed after or during the grinding step, or before or during heating and makes it possible to optimize the mechanical performance of the final binder.

The carbonation step is preferentially done prior to the heating step.

The carbonation step in particular could occur during the grinding step or just after the grinding step.

Further, it may be performed before, during or after the heating step of the concrete waste. The two steps (carbonation & heat activation) could be done separately, in any order, or simultaneously.

Wet carbonation is here defined as carbonation in the presence of water or steam in an amount of at least 5 weight-% water expressed on the total weight of the dry raw material to be carbonated. This may be achieved for example by water or steam injection during the grinding stage. Further it may be achieved by water or steam or saturated steam injection during heating in particular during the initial or concluding stages of the heating.

Wet carbonation of the ground material followed by heat activation provides the best strength increase.

Nevertheless, dry carbonation at high temperatures (carbonation of CaO coming from CSH and Ca(OH)₂ destruction due to thermal activation) may lead to sufficient results either.

This step is as a matter of fact accompanied by the injection of CO₂ in an amount of at least 5 vol-% calculated on the total gas volume during carbonation, preferably more than 15 vol-%. Further, wet carbonation can be conducted in an autoclave using saturated steam and a CO₂ containing gas under high pressure. The powdered material may be agitated while being autoclaved. The material may be subjected to deagglomeration after autoclaving due to agglomerations which might have occurred during the steam and carbonation treatment.

Dry carbonation is here defined as a carbonation with a humidity below 5 weight-% water expressed on the total weight of the dry raw material to be carbonated. Dry carbonation can be conducted during said stages of the process.

The concrete waste has preferably a mean particle size comprised between 0.005 and 5 mm. It was found that the use of concrete waste particles having a smaller size improves the performance, and of the resulting mineral component.

The concrete waste is either composed entirely of hardened cement paste (cement and water), or is a mixture of hardened cement paste and partially ground sand or aggregates. Preferentially, the concrete waste comprises at least 10 weight-% of hardened cement paste.

The obtained mineral component (MIC) can be used as such (100%) as a binder, for example to produce a geopolymer.

It is nevertheless advantageous to use the obtained mineral component to partially substitute Portland cement in a binder composition. For example, in the binder composition Portland cement may be substituted by at least 25 weight-% up to 75 weight-% by the respective MIC according to the invention.

With the present invention, not only has it been possible to simply reactivate a concrete waste by heating to a few hundred °C as in the state of the art, the addition of a specific carbonation step at a given moment in the manufacturing process is creating a new enhanced material.

The combination of carbonation of the concrete waste and its heating to the temperature range according to the invention leads to a synergistic effect and the manufacture of a new binder with surprisingly good mechanical strength.

The grinding of the concrete waste up to 2'000 cm²/g Blaine and more, in particular 4'000 cm²/g Blaine has further been found to be advantageous especially for the grade of carbonation, measured as described in the standard EN 196-6:2018.

As already mentioned, this carbonation step could occur:
- during or immediately after the grinding step, or
- before or during the heating step.

With the invention it is possible to:
- create a new MIC by reusing large quantities of concrete waste,
- generate a mass gain due to the CO₂ uptakes,
- trap CO₂ in industrial scale in minerals, and
- enhance the overall carbon footprint (reaction with CO₂ + potential use of sustainable energy sources, and therefore potentially a 100% renewable energy-mix).

Surprisingly, the addition of a carbonation step of the concrete waste before (or during) the heating step makes it possible to obtain a better reactivity for the final (reactivated) binder (than after a simple heating step).

The addition of a carbonation step could also improve the water demand (which seems to be greater in the case of reactivated pastes than in the case of reference pastes).

According to a first aspect the invention relates to a method for the preparation of a carbonated mineral component in particular for the use as a substituent of cement in hydraulic binder compositions wherein a first raw material comprising at least one of the group of concrete demolition waste, recycled cement paste, hardened concrete paste, hardened cement paste, concrete fines, dried concrete sludges, or any mineral component containing hydrated calcium silicates or calcium aluminates is carbonated and heated.

In an embodiment the concrete waste is either composed entirely of hardened cement paste (cement and water), or is a mixture of hardened cement paste and partially ground sand or aggregates and preferentially the concrete waste comprises at least 10 weight-% of hardened cement paste.

In an embodiment the carbonation step is done prior to the heating step.

In an embodiment the raw material is heated to a temperature T°C of 250°C < T°C < 800°C, preferentially at 250°C < T°C < 650°C, and more preferentially 300°C < T°C < 600°C.

In an embodiment the raw material is crushed to a fineness of 0.1 to 5 mm.

In an embodiment the crushed raw material is ground to a fineness of at least 2'000 cm²/g Blaine, preferably more than 3'000 cm²/g Blaine and more preferred 4'000 cm²/g Blaine or more. In any case, the crushed raw material has a fineness of less than 15'000 cm²/g Blaine, measured as described in the standard EN 196-6:2018.

In an embodiment the raw material is heated in a heat exchanger, such a gas flow heat exchanger or a heat screw conveyor, or by mixing directly with hot clinker.

In an embodiment the raw material is heated in a vertical counterflow heat exchanger or a fluidized bed heat exchanger or any other apparatus suitable for transferring heat from a gas flow to a powdered material.

In an embodiment the energy the heat exchanger uses is sustainable energy.

In an embodiment the energy is sourced from one or more of the following group: the combustion of biogas, gases from the pyrolysis of renewable raw materials, hydrogen manufactured by the electrolysis of water or electricity from solar, wind or water energy.

In an embodiment heat from other industrial processes like from a cement kiln or a cement clinker cooler is used.

In an embodiment carbonation is achieved with CO₂ which originating from a cement kiln from decarbonation of limestone and combustion of fuel, from the combustion of biogas, gases from the pyrolysis of renewable raw materials and the like from the sourcing of energy by combustion for the heating step or from other industrial processes or from ambient air.

In an embodiment carbonation is performed after or during the grinding step, or before or during heating.

In an embodiment carbonation is performed before, during or after the heating step of the raw material.

In an embodiment the carbonation and heating of the raw material are performed separately in any order or simultaneously.

In an embodiment the carbonation is a wet carbonation of the raw material followed by heating.

In an embodiment dry carbonation at high temperatures by carbonation of CaO coming from CSH and Ca(OH)₂ or other CA-rich phases destruction due to thermal activation is performed.

In an embodiment wet carbonation is a carbonation in the presence of water or steam in an amount of at least 5 vol-% H₂O.

In an embodiment wet carbonation is achieved by one or more of the following: water or steam injection during the grinding stage, water or steam or saturated steam injection during heating in particular during the initial or concluding stages of the heating.

In an embodiment wet carbonation further comprises supplying or injection of CO₂ in an amount of at least 10 vol-% calculated on the total gas volume during carbonation, preferred more than 20 vol-%.

In an embodiment wet carbonation is conducted in an autoclave using saturated steam and a CO₂ containing gas under high pressure.

In an embodiment the powdered material may be agitated while being autoclaved and the material may be subjected to deagglomeration after autoclaving due to agglomerations which might have occurred during the steam and carbonation treatment.

In an embodiment dry carbonation is a carbonation with a humidity below 5 weight-% water expressed on the total weight of the dry raw material to be carbonated.

Another aspect of the invention pertains to a carbonated mineral component manufactured according to one or more of the aforementioned embodiments, wherein the carbonated mineral component comprises a ground first raw material comprising at least one of the group of concrete demolition waste, hardened concrete paste, hardened cement paste, or any mineral component containing hydrated Calcium silicates, calcium aluminates which are carbonated and heated.

In an embodiment the mineral component has a Blaine fineness comprised between 2'000 cm²/g and 10'000 cm²/g, preferentially between 3'000 and 7'000 cm² /g, measured as described in the standard EN 196-6:2018.

Still another aspect of the invention relates to a method for the preparation of a hydraulic binder wherein a carbonated mineral component according to one or more of the preceding embodiments, manufactured with a method according to one or more of the aforementioned embodiments is mixed with at least a cementitious component, in particular a Portland cement or a Portland cement clinker.

In an embodiment the carbonated mineral component is added to cement clinker before or at the milling and ground together with the cement clinker to obtain a binder composition comprising at least the carbonated mineral component and the cement.

In an embodiment the ground carbonated mineral component substitutes the cement component in the mixture in an amount of 25 to 75 weight-%.

Yet another aspect of the invention relates to the use of a carbonated mineral component according to one or more of said embodiments manufactured according to one or more of the aforementioned embodiments as a substituent for cement in a hydraulic binder composition for mortars and concrete.

Still another aspect of the invention pertains to a hydraulic binder composition for mortars and concrete comprising a carbonated mineral, component according to the aforementioned embodiments, manufactured with a method according to one or more of said embodiments and a cementitious component, in particular a Portland cement or a Portland cement clinker.

The invention is explained by way of examples and a accompanied drawing which shows in:
- Figure 1:: a schematic process flowchart;
- Figure 2:: a suitable device for the heating of the raw material;
- Figure 3:: another schematic flow chart;
- Figure 4:: the compressive strength at 2,7 and 28 days of comparative examples, wherein concrete demolition waste replaces a cement by 25% and a calcination of 450°C;
- Figure 5:: the compressive strength at 2,7 and 28 days of comparative examples, wherein concrete demolition waste replaces a cement by 25% and a calcination of 600°C;
- Figure 6:: the compressive strength at 2,7 and 28 days of comparative examples, wherein recycled concrete fines replace a cement by 25% and a calcination of 450°C;
- Figure 7:: the compressive strength at 2,7 and 28 days of comparative examples, wherein recycled concrete fines replace a cement by 25% and a calcination of 600°C;
- Figure 8:: the compressive strength at 2,7 and 28 days of comparative examples, wherein concrete sludge replace a cement by 25% and a calcination of 550°C;
- Figure 9:: the compressive strength after 28 days of a CEM I 52,5 N in comparison to examples in which the cement was replaced by 25% recycled cement paste, calcined recycled cement paste and carbonated calcined recycled cement paste, calcination at 450°C;
- Figure 10:: the compressive strength after 28 days of a CEM I 52,5 N in comparison to examples in which the cement was replaced by 50% recycled cement paste, calcined recycled cement paste and carbonated calcined recycled cement paste, calcination at 450°C;

The method according to the invention comprises two substantial steps in the processing.

One substantial step is the heating of the first raw material wherein the raw material may consist of one or more of the group of concrete demolition waste, hardened concrete paste, hardened cement paste or any mineral component containing hydrated calcium silicates, calcium aluminates and the like.

The purpose of the heating step is that the heat treatment of said first raw material results in a material that has a pozzolanic reactivity so that the heating step can be seen as an activation step.

The heating step can be performed in any suitable device which is capable of transferring heat to a raw material which consists of particles and in particular fine particles. The particles to be activated may be particles which are obtained by crushing said raw material. In this case the particle size would be preferable between 0.1 and 5 mm.

If it is desired it is possible to grind the crushed material to a Blaine fineness of at least 2'000 cm²/g, preferably more than 3'000 cm²/g and more preferred 4'000 cm²/g or more, measured as described in the standard EN 196-6:2018.

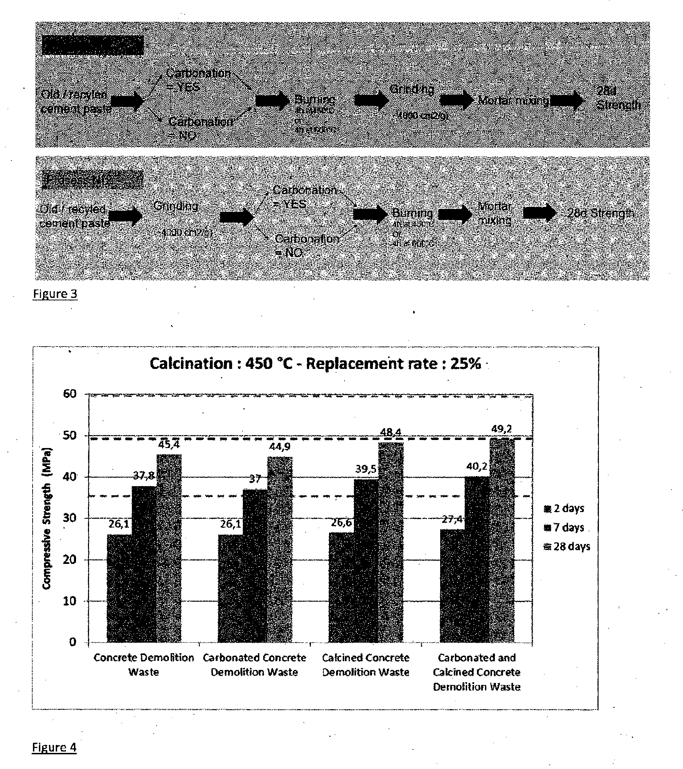

To transfer heat into this material a device as shown in Figure 3 may be used which is a kind of a rotary drum-like heat exchanger.

Such a heat exchanger may be heated by an electrical heating which is for example circumferential placed at the outer wall of the drum-like heat exchanger. Especially in cases where a powdered material is heated, such a rotary heat exchanger may be advantageous.

Especially finally ground material as set forth above can be heated in a fluidized bed device where a hot gas is conducted through the finely ground material.

The heating is conducted in such a way that the raw material is heated to temperatures between 250°C and 650°C, preferentially between 400°C and 600°C.

The energy needed for heating the raw material may be electrical energy or a hot gas flow wherein in both cases it is preferred to use sustainable energy for the heating.

Sustainable energy in case of electrical energy may be energy from solar power, wind energy, water energy or the like.

Further, hot gas flows from other industrial processes may be used.

These gas flows can be used directly in case the temperature range is in the respective area between 250°C and 650°C, whereby gases with higher temperatures may be cooled down. These gas flows can be used directly by flowing through the fluidized bed, for example, or indirectly by heating-up a gas-like ambient air via a heat exchanger. The latter may occur for example if the gas flow is contaminated within gradients which are not appreciated in the product.

Examples for these gas flows can be the hot gas from the rotary cement kiln or from a cement clinker cooling device.

Further, hot gas streams can be achieved by combustion of combustible liquids or gases. It is preferred that these combustible liquids or gases originate from sustainable processes.

This may be, for example, hydrogen originating from the electrolysis of water by sustainable electrical energy, combustion of biogas like biomethane or methane which is produced by the microbiobal recombination of hydrogen with CO₂ in natural gas reservoirs, alcohol from the fermentation of sustainable vegetable products or the paralysis of vegetable sustainable products.

Besides this first substantial step of pozzolanic activation by heating, a second substantial step is carried out which is a carbonation of the raw material.

In general, the carbonation can be carried out after or during the crushing and grinding of the concrete waste. Preferentially, the carbonation step is carried out after the crushing and grinding of the concrete waste.

In cases where concrete sludges are used, crushing and grinding may not be required.

Further, the carbonation can be carried out as a wet carbonation or a dry carbonation.

The definition of a wet and a dry carbonation has been given above.

In general, the carbonation may be carried out with CO₂ enriched gas flows as already mentioned wherein this CO₂ enriched gas flows may be separate gas flows with CO₂ from ambient air or with CO₂ from industrial processes and the like. The carbonation can be partially or fully achieved by the gas flows used for the heating as well.

In case a carbonation is done during the heating step which means, for example, at the beginning during or at the end of the heating step, the same devices are used.

Further to the above-mentioned devices heating and carbonation may take place in an autoclave with steam or saturated steam, the CO₂ rich gas and heat.

After the two substantial steps a deagglomeration step may be conducted in cases needed.

The deagglomeration step may be a joint grinding and mixing step of the carbonated mineral component according to the invention and cement clinker in a rotary mill.

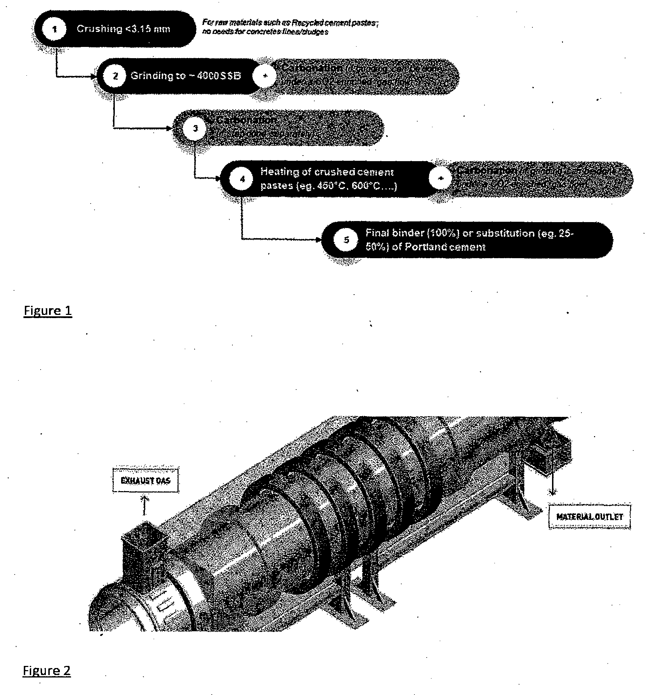

One example of carrying out the invention is schematically shown in Figure 1.

After the crushing of the raw material, the raw material is ground to a Blaine fineness of about 4'000 cm²/g, measured as described in the standard EN 196-6:2018. At this stage the carbonation can take place wherein grinding is done under a CO₂ enriched gas flow or CO₂ containing atmosphere.

Alternatively or additionally, a carbonation step can be carried out afterwards wherein the carbonation as already pointed out can be done in various devices and by various ways as long as the ground raw material is perfused by the CO₂ enriched gas flow. Afterwards, the heating of the crushed and/or ground raw material is performed at temperatures of 450°C or 600°C. Alternatively or additionally carbonation can take place even during the heating of the ground raw material.

After the heating step and the cooling of the in this way achieved material, the carbonated mineral component produced in this manner is mixed with Portland cement as a substitute of that cement component.

In Figure 3 two general processing paths for examples of the invention are shown in which in a first process a carbonation takes place before heating but without grinding and the grinding is conducted after the heating step.

In a second process the raw material is ground to 4'000 cm²/g, afterwards carbonated and then heated.

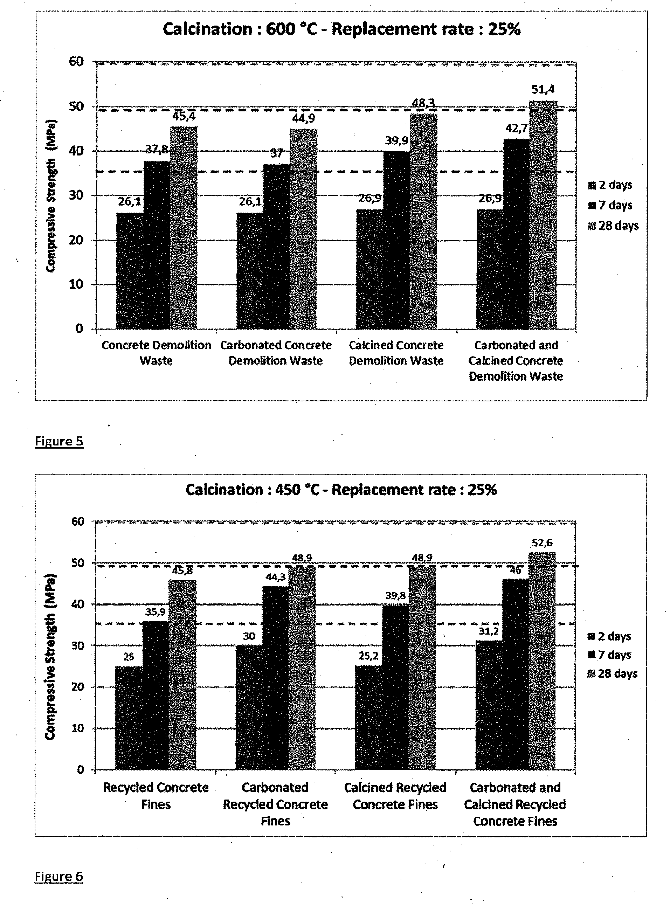

Figures 4 and 5 show comparative examples, wherein samples in which a portland cement is replaced by 25% concrete demolition waste are compared. The calcination temperature if applied was 450°C in Figure 4 and 600°C in Figure 5.

The dotted lines show the compressive strength of a CEM I 52,5 N after 2,7 and 28 days.

Four cases are shown from the left to the right: concrete demolition waste, carbonated concrete demolition waste, calcined demolition waste and carbonated and calcined concrete demolition waste.

As it can be seen the short term compressive strength (2 days) is in both charts for every sample nearly the same. The same appears for the 7 day medium term compressive strength. Although it is obvious that calcination of the Concrete demolition waste leads to a somewhat higher strength and carbonation and calcination increase said strength further. In comparison between the calcination temperatures the higher temperature increases for carbonated and calcined concrete demolition waste the strength only slightly for the other samples not at all.

The same appears having a look on the long term compressive strength. An increase is shown by calcination and further by calcination and carbonation om one hand.

On the other hand a slight increase in compressive strength after 28 days can be derived by the higher calcination temperature..

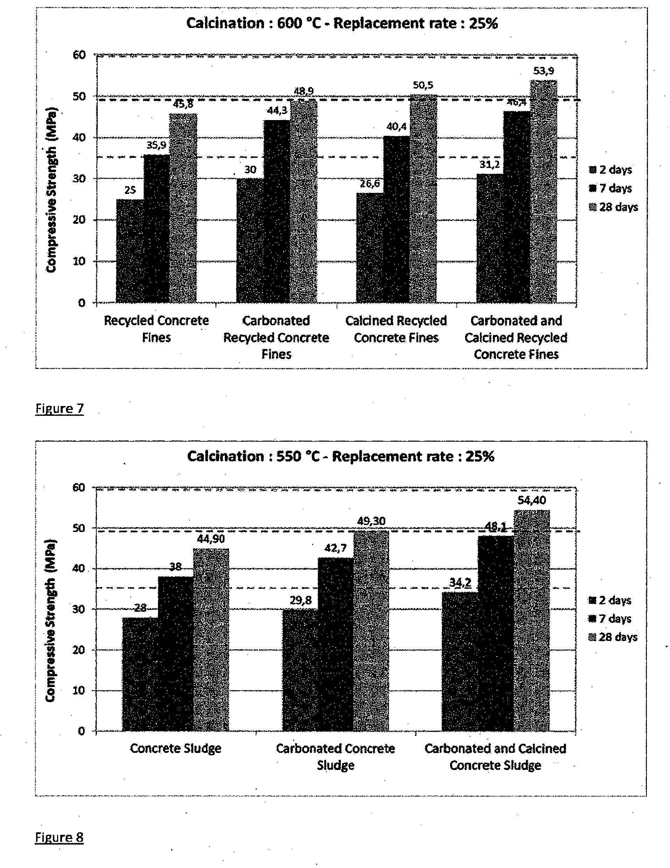

In Figures 6 and 7 charts are presented in which the effect of recycled concrete fines is shown. Again the portland cement is replaced by 25% and the calcination temperatures are 450°C and 600°C

It seems that the carbonation has in this samples a stronger effect on the short and medium term compressive strength rather than the calcination temperature which has a slight increasing effect.

In Figure 8 samples are shown in which a portland cement is replaced by 25% concrete sludge, carbonated concrete sludge and carbonated and calcined concrete sludge respectively are compared. The calcination temperature was 550°C.

As a result the carbonation increases the medium and long term compressive strength remarkably. The carbonation and calcination is increasing that compressive strength even more.

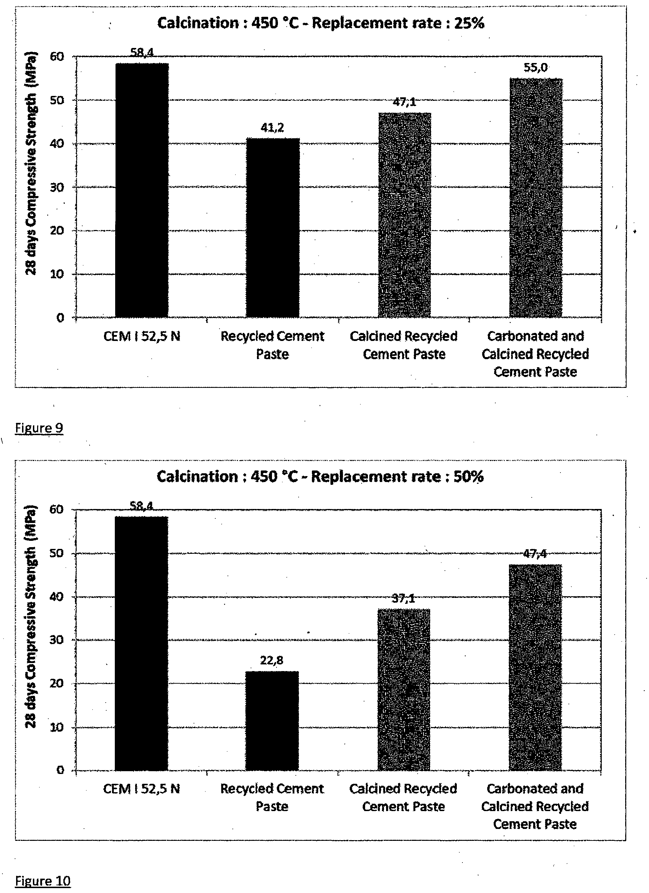

Figures 9 and 10 show samples in which a CEM I 52,5 and samples in which that cement is replaced by 25% (Figure 9) and 50% (Figure 10) of recycled cement paste. The calcination temperature is 450°C in both cases.

As it could be expected from the other samples in comparison to recycled cement paste the calcination leads to a higher 28 day compressive strength. With a carbonated and calcined recycled cement paste the compressive strength is increases even more.

The compressive strength is at a replacement of 50% somewhat lower but still remarkably high

The concrete demolition waste used for these examples is partially carbonated, as throughout its lifetime, it was exposed to the CO₂ present in the air. The examples show that the method of present invention provides outstanding performance even if the waste material is partially carbonated prior its treatment according to the present invention.

As a result, even without carbonation heating a recycled cement paste or other raw material as set forth above to a temperature between 250°C and 650°C results in a mineral component which is able to contribute to the 28-day compressive strength of a binder composition.

As a further result the incorporation of CO₂ by carbonation of the raw material in a suitable manner results in a carbonated mineral component, capable of contributing to the strength of a mineral component, even if it is heated at lower temperatures (450°C) and further acts a CO₂ trap.

By using sustainable energy for the heating of the mineral component, the carbon footprints of the mineral component can be put down to zero and the overall carbon footprint of a binder composition with that mineral component and a cement component can be lowered remarkably.

Heating the raw material in said manner and carbonating it absorbs CO₂ and serves as a CO₂ trap and may in a mixture with a cementitious component for a hydraulic binder composition brings the carbon footprint of the overall binder composition to zero.

## Claims

1. Method for the preparation of a at least partially carbonated mineral component, in particular for the use as a substituent for cement in hydraulic binder compositions, wherein a raw material comprising at least one of the group of
- concrete demolition waste,
- recycled cement paste,
- hardened concrete paste,
- hardened cement paste,
- concrete fines,
- dried concrete sludges, or
any mineral component containing hydrated calcium silicates or calcium aluminates, is carbonated and heated or heated.

2. Method according to claim 1, wherein the concrete waste is either composed entirely of hardened cement paste (cement and water), or is a mixture of hardened cement paste and partially ground sand or aggregates and preferentially the concrete waste comprises at least 10 weight-% of hardened cement paste.

3. Method according to claim 1, wherein the carbonation step is done prior to the heating step.

4. Method according to claim 1, wherein the raw material is heated to a temperature T°C of 250°C < T°C < 800°C, preferentially 250°C < T°C < 650°C, and more preferentially 300°C < T°C < 600°C.

5. Method according to any one of the preceding claims, wherein the raw material is crushed to a fineness of 0.1 to 5 mm.

6. Method according to any one of the preceding claims, wherein the crushed raw material is ground to a Blaine fineness of at least 2'000 cm²/g, preferably more than 3'000 cm²/g and more preferred 4'000 cm²/g or more, measured as described in the standard EN 196-6:2018.

7. Method according to any one of the preceding claims, wherein the raw material is heated in a heat exchanger, such a gas flow heat exchanger or a heat screw conveyor, or by mixing directly with hot clinker

8. Method according to any one of the preceding claims, wherein the raw material is heated in a vertical counterflow heat exchanger or a fluidized bed heat exchanger or any other apparatus suitable for transferring heat from a gas flow to the powder raw material.

9. Method according to any one of the preceding claims, wherein the energy the heat exchanger uses is sustainable energy.

10. Method according to any one of the preceding claims, wherein the energy is sourced from one or more of the following groups:
- the combustion of biogas, gases from the pyrolysis of renewable raw materials,
- hydrogen manufactured by the electrolysis of water; or
- solar heat from a solar furnace
- electricity from solar, wind or water energy.

11. Method according to any one of the preceding claims, wherein heat from other industrial processes like from a cement kiln is used.

12. Method according to any one of the preceding claims, wherein carbonation is achieved with CO₂ originating from a cement kiln from decarbonation of limestone and combustion of fuel, from the combustion of biogas, gases from the pyrolysis of renewable raw materials and the like, from the sourcing of energy by combustion for the heating step, from other industrial processes or from ambient air.

13. Method according to any one of the preceding claims, wherein carbonation is performed during or after the grinding step, or before or during heating.

14. Method according to any one of the preceding claims, wherein carbonation is performed before, during or after the heating step of the raw material.

15. Method according to any one of the preceding claims, wherein the carbonation and heating of the raw material are performed separately in any order or simultaneously.

16. Method according to any one of the preceding claims, wherein the carbonation is a wet carbonation of the raw material followed by heating.

17. Method according to any one of the preceding claims, wherein dry carbonation is performed at high temperatures by carbonation of CaO originating from Calcium-Silicate-Hydrate and Ca(OH)₂ and other Ca-rich phases destruction by thermal activation.

18. Method according to any one of the preceding claims, wherein carbonation is performed as wet carbonation in the presence of water or steam in an amount of at least 5 weight-% water based on the total weight of the dry raw material to be carbonated.

19. Method according to any one of the preceding claims, wherein wet carbonation comprises one or more of the following: water or steam injection during the grinding stage, water or steam or saturated steam injection during heating, in particular during the initial or concluding stages of the heating.

20. Method according to any one of the preceding claims, wherein the wet carbonation further comprises injection of CO2 in an amount of at least 10 vol-% based on the total gas volume during carbonation, preferably in an amount of more than 20 vol-%.

21. Method according to any one of the preceding claims, wherein wet carbonation is conducted in an autoclave using saturated steam and a CO2 containing gas under high pressure.

22. Method according to any one of the preceding claims, wherein the powdered raw material may be agitated while being autoclaved and the powdered material may be subjected to deagglomeration after autodaving.

23. Method according to any one of the preceding claims, wherein dry carbonation is carried out with a humidity below 5 weight-% water expressed on the total weight of the dry raw material to be carbonated .

24. Carbonated mineral component manufactured according to any one of the preceding claims.

25. Carbonated mineral component according to claim 22, wherein the carbonated mineral component has a Blaine fineness between 2'000 cm²/g arid 10'000 cm²/g, preferentially between 3'000 and 7'000 cm²/g, measured as described in the standard EN 196-6:2018.

26. Method for the preparation of a hydraulic binder composition, wherein a carbonated mineral component according to claims 22 or 23, or manufactured with a method according to any one of the claims 1 to 21 is mixed with at least a cementitious component, in particular a Portland cement or a Portland cement clinker.

27. Method according to claim 24 wherein the carbonated mineral component is added to cement clinker before or at the milling and ground together with the cement clinker to obtain a binder composition comprising at least the carbonated mineral component and the cement clinker.

28. Method according to claim 23 or 24 wherein the hydraulic binder composition comprises the ground carbonated mineral component in an amount of 25 weight-% to 75 weight-% of the hydraulic binder composition.

29. The use of a carbonated mineral component according to claims 22 or 23, or manufactured according to one of the claims 1 to 21 as a substituent for cement in a hydraulic binder composition for mortars and concrete.

30. Hydraulic binder composition for mortars and concrete comprising a carbonated mineral component according to claims 22 or 23, or manufactured with a method according to one of the claims 1 to 21 and a cementitious component, preferably a Portland cement or a Portland cement dinker.

31. Concrete composition comprising a hydraulic binder composition according to claim 28 and aggregates.
